# EUROPÄISCHE PATENTSCHRIFT

(11) **EP 2 936 077 B1**
(45) Veröffentlichungstag und Bekanntmachung des Hinweises auf die Patenterteilung: **20.02.2019**
(21) Anmeldenummer: 13808013.0
(22) Anmeldetag: 17.12.2013
(51) Int. Cl.: G01D 11/24, G01B 7/00, G01D 5/20

(54) **SENSOR ZUM ERFASSEN EINER POSITION EINES GEBERELEMENTS**
SENSOR FOR DETECTING THE POSITION OF A GENERATOR ELEMENT
DÉTECTEUR DE DÉTECTION DE L'EMPLACEMENT D'UN ÉLÉMENT CAPTEUR

(30) Priorität: 20.12.2012 DE 102012224075
(43) Veröffentlichungstag der Anmeldung: 28.10.2015
(73) Patentinhaber: Continental Teves AG & Co. OHG, 60488 Frankfurt am Main (DE)
(72) Erfinder: SCHILLINGER, Jakob, 85080 Gaimersheim (DE); HUBER, Dietmar, 63322 Rödermark (DE); GRUNWALD, Frank, 61440 Oberursel (DE); MÜLLER, Hilmar, 35452 Heuchelheim (DE); GOLL, Manfred, 63695 Glauburg 2 (DE)
(86) Internationale Anmeldenummer: PCT/EP2013/076927
(87) Internationale Veröffentlichungsnummer: WO 2014/095881

(56) Entgegenhaltungen:
- WO-A1-2011/116198
- DE-A1-102007 045 535
- DE-A1-102010 042 832
- DE-A1-102011 053 223
- DE-A1-102012 206 506
- DE-T5-112010 004 410

## Beschreibung

Die Erfindung betrifft einen Sensor zum Erfassen einer Position eines Geberelements, Verfahren zur Herstellung des Sensors und ein Verfahren zur Herstellung eines Übertragers. Aus der WO 2010 / 037 810 A1 ist ein Sensor zum Ausgeben eines elektrischen Signals basierend auf einer erfassten physikalischen Größe bekannt. Der Sensor weist eine Messschaltung auf, die in einem Schaltungsgehäuse eingehaust ist.

Aus der DE 11 2010 004410 T5 ist ein Sensor bekannt, bei der ein Teil der Verdrahtung von einer Schutzmasse umhüllt ist. Aus der DE 10 2010 042832 A1 ist ein Verfahren zur Herstellung eines induktiven Sensors bekannt, insbesondere eine Möglichkeit eine Spulenbaugruppe mit einem Sensorgehäuse zu versehen.

Die DE 10 2012 206506 A1 beschreibt einen Winkelsensor mit einem eingegossenen Sensorelement.

Aus der DE 10 2007 045535 A1 ist ein Sensor bekannt, der lediglich durch einen Vergusskörper geschützt wird.

Es ist Aufgabe der Erfindung, den bekannten Sensor zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Sensor zum Erfassen einer Position eines Geberelements, das eine von der Position abhängige physikalische Größe abgibt, einen Wandler zum Wandeln der physikalischen Größe in ein elektrisches Gebersignal, einen Schaltkreis auf einem Verdrahtungsträger zum Empfangen des Gebersignals aus dem Wandler und Ausgeben eines dem Gebersignal entsprechenden Messsignals und eine Schutzmasse, die den Wandler und den Verdrahtungsträger wenigstens teilweise umhüllt und so den Wandler auf dem Verdrahtungsträger hält.

Dem angegebenen Sensor liegt die Überlegung zugrunde, dass die Messschaltung in dem eingangs genannten Sensor eingerichtet sein könnte, eine von der Position eines Geberelements abhängige physikalische Größe, wie ein elektrisches und/oder magnetisches Feld, Licht oder Schall zu erfassen und in ein von der Position des Geberelements abhängiges elektrisches Messsignal umzuwandeln. Ein derartiger Positionssensor könnte beispielsweise Winkelpositionen und/oder lineare Positionen des Geberelements erfassen und so beispielsweise in einem Fahrzeug die Stellung eines Gas- und/oder Bremspedals bestimmen.

Im Rahmen des angegebenen Sensors wird jedoch erkannt, dass ein Wandler zum Wandeln der vom Geber abgegebenen und von der zu erfassenden Position abhängigen physikalischen Größe in ein zumindest von dem gewünschten Messsignal abhängigen Gebersignal fest auf einem Verdrahtungsträger gehalten werden müsste, auf dem auch der Schaltkreis getragen ist, der das Messsignal ausgibt.

Der Wandler könnte dabei in einem Wandlergehäuse aufgenommen werden. Um den gesamten Sensor vor mechanischen und anderen Einflüssen einerseits zu schützen, die einzelnen Bauteile des Sensors aber auch sicher zusammenzuhalten könnte der im Wandlergehäuse aufgenommene Wandler schließlich zusammen mit den anderen Bauteilen in einem Sensorgehäuse angeordnet und vergossen werden.

Hierzu mussten jedoch drei verschiedene Elemente, das Wandlergehäuse, der Verguss und das Sensorgehäuse bereitgestellt werden, was nicht nur kostenintensiv wäre sondern auch einen entsprechend großen Bauraum in Anspruch nähme.

Demgegenüber liegt dem angegebenen Sensor die Idee zugrunde, dass sämtliche Bauteile über eine gemeinsame Schutzmasse zusammengehalten werden könnten. Sämtliche elektrischen Bauteile des angegebenen Sensors wie der Wandler und der Schaltkreis könnten beispielsweise in Klebe-, Löt- oder Sintertechnik miteinander kontaktiert werden. Im Gegensatz zu dem oben genannten Aufbau könnten die elektrisch kontaktierten Bauteile nun mit der Schutzmasse unmittelbar in einem einzigen Spritzvorgang umspritzt oder umgossen werden, die auf diese Weise nicht nur die Bauteile des Sensors zusammenhält sondern auch einhaust und so vor Verschmutzungen und anderen Umwelteinflüssen wie Feuchtigkeit schützt. Auf diese Weise kann der angegebene Sensor kostengünstig und bauraumsparend aufgebaut werden.

Der Wandler und der Verdrahtungsträger können mit der Schutzmasse unmittelbar umspritzt oder umgossen sein.

Ferner können der Wandler und der Verdrahtungsträger mit der Schutzmasse in einem einzigen Spritzvorgang oder einem einzigen Umgießvorgang entsprechend umspritzt oder umgossen werden.

Schließlich kann die Schutzmasse direkt ein Außengehäuse des angegebenen Sensors bilden.

Erfindungsgemäß weist die Schutzmasse einen Ausdehnungskoeffizienten auf, der im Bereich eines Ausdehnungskoeffizienten der elektromechanischen Komponente liegt. Der angegebenen Weiterbildung liegt die Überlegung zugrunde, dass ein unterschiedlicher Ausdehnungskoeffizient zwischen dem Wandler und der Schutzmasse zu einem Eintrag an mechanischen Belastungen wie mechanischen Spannungen führen könnte. Diese mechanischen Belastungen könnten das Messergebnis verfälschen, weshalb im Rahmen des angegebenen Sensors die eingetragenen Spannungen so gering wie möglich gehalten werden sollten. Dies wird durch eine geeignete Wahl des Ausdehnungskoeffizienten der Schutzmasse und des Wandlers erreicht.

Erfindungsgemäß umfasst die Schutzmasse ein Duroplast-Material. Besonders günstig wirkt das Duroplast-Material im Rahmen des angegebenen Sensors, wenn als Wandler ein einen magnetischen Fluss wandelndes elektrisches Bauelement mit einem magnetischen Kern verwendet wird, dessen Wandlungsprinzip von einer Sättigung des magnetischen Kerns abhängt. Die Sättigung des magnetischen Kerns wird abhängig von den eingetragenen Spannungen erreicht, die so das Messergebnis verfälschen können. Gängige Materialen für den magnetischen Kern, wie Eisen weisen jedoch einen Ausdehnungskoeffizienten auf, der im Bereich der Ausdehnungskoeffizienten von Duroplast-Materialien liegt.

In einer anderen Weiterbildung des angegebenen Sensors umfasst der Schaltkreis auf dem Verdrahtungsträger einen von der Schutzmasse freigestellten Teil. An diesem freigestellten Teil könnte der Sensor festgehalten werden, wenn der Verdrahtungsträger und der Wandler mit der Schutzmasse umhüllt werden.

In einer bevorzugten Weiterbildung des angegebenen Sensors ist der Schaltkreis in dem von der Schutzmasse freigestellten Teil eingerichtet, das Messsignal auszugeben. Auf diese Weise kann der zum Aufbringen der Schutzmasse um den Verdrahtungsträger und den Wandler notwendige freigestellte Teil nutzbringend verwendet werden, um den angegebenen Sensor beispielsweise über ein Kabel an eine übergeordnete Einheit wie beispielsweise eine Motorsteuerung in einem Fahrzeug anzuschließen. Die elektrische Kontaktierung des Kabels mit dem Schaltkreis im freigestellten Teil kann dabei über Kontaktierfedern, Einpresspins, Randgruppenstecker, Lötung oder Klebung erfolgen.

Kontaktierfedern, Einpresspins, Randgruppenstecker, Lötung oder Klebung erfolgen.

In einer noch anderen Weiterbildung des angegebenen Sensors ist der Wandler ein elektrischer Übertrager, insbesondere ein linearer induktiver Positionssensor, LIPS genannt, der eingerichtet ist, wenigstens ein Referenzsignal in Abhängigkeit einer Position des Geberelements als Gebersignal zu übertragen. Bei dem Übertrager kann es sich um das oben erwähnte den magnetischen Fluss wandelnde elektrische Bauelement handeln. Im Rahmen des angegebenen Sensors soll unter einem Übertrager ein elektrischen Bauelement verstanden werden, dass zwei voneinander galvanisch getrennte Spulen aufweist, die untereinander über ein gemeinsames Kontaktmedium wie Luft oder den oben genannten magnetischen Kern elektrische Energie übertragen. Ist das Geberelement beispielsweise selbst ein Magnet, dann ändert es die Übertragungseigenschaften des gemeinsamen Kontaktmediums, was sich in einem veränderten Übertragungsverhalten der beiden Spulen zeigt. Bei einem LIPS soll es sich im Rahmen des angegebenen Sensors um einen Übertrager handeln, der eine dritte Spule aufweist, wobei die zweite und dritte Spule zum Austausch elektrischer Energie mit der ersten Spule angeordnet sind. Je nach Lage des als Magnet ausgebildeten Geberelementes zu zweiten und dritten Spule ergibt sich eine bestimmte Konstellation der Übertragungsverhältnisse zwischen der ersten und zweiten sowie der ersten und dritten Spule. Da die Lage des Geberelementes nun mit zwei verschiedenen Übertragungsverhältnissen an zwei verschiedenen Orten erfasst wird, kann die oben genannte Sättigung des magnetischen Kerns in der Erfassung Positionserfassung mit verwendet werden.

Wenn die Spulen in dem Übertrager über einen Spulenkörper auf einen magnetischen Kern aufgewickelt sind, weist der magnetische Kern in einer bevorzugten Weiterbildung einen Ausdehnungskoeffizienten auf, der im Bereich eines Ausdehnungskoeffizienten des Spulenkörpers liegt. Auf diese Weise kann der Spulenkörper direkt auf den magnetischen Kern beispielsweise durch Umspritzen mit einem Duroplast aufgebracht werden, ohne dass Einträge von mechanischen Spannungen auf den magnetischen Kern und somit Verfälschungen des Messergebnisses mit dem Übertrager auftreten würden. Anderenfalls müssten diese Einträge von mechanischen Spannungen durch eine Lagerung des magnetischen Kerns in einem elastischen Material innerhalb des Spulenkörpers vermieden werden.

Gemäß einem weiteren Aspekt der Erfindung umfasst ein Verfahren zum Herstellen eines angegebenen Sensors die Schritte:
- Kontaktieren des Wandlers mit dem Schaltkreis auf dem Verdrahtungsträger, und
- Umhüllen des Wandlers und des Verdrahtungsträgers wenigstens teilweise mit der Schutzmasse, so dass die Schutzmasse den Wandler auf dem Verdrahtungsträger hält.

In einer besonderen Weiterbildung des angegebenen Verfahrens wird eine von der Schutzmasse einzuhüllende Oberfläche des Verdrahtungsträgers und/oder des Wandlers vor dem Umhüllen des Wandlers und des Verdrahtungsträgers mit der Schutzmasse aktiviert. Unter einer Aktivierung der Oberfläche des Verdrahtungsträgers und/oder des Wandlers soll nachstehend eine teilweise Zerstörung der molekularen Struktur der Oberfläche des Verdrahtungsträgers und/oder des Wandlers verstanden werden, so dass an der Oberfläche des Verdrahtungsträgers und/oder des Wandlers freie Radikale entstehen. Diese freien Radikale sind in der Lage, chemische und/oder physische Verbindungen mit der Schutzmasse einzugehen, so dass diese sich nicht mehr von der Oberfläche des Verdrahtungsträgers und/oder des Wandlers lösen kann.

Die Schutzmasse kann dabei ein polares Material, wie Polyamid umfassen. Das polare Polyamid kann sich in einer dem Fachmann bekannten Weise physikalisch mit der aktivierten Oberfläche des Verdrahtungsträgers und/oder des Wandlers verbinden und so den mechanischen Halt zwischen dem Verdrahtungsträger und dem Wandler verbessern.

In einer zusätzlichen Weiterbildung des angegebenen Sensors ist wenigstens ein Teil der Oberfläche des Verdrahtungsträgers und/oder des Wandlers im Kontaktbereich mit der Schutzmasse aufgeraut, so dass die wirksame aktivierte Oberfläche vergrößert und die Haftwirkung zwischen Verdrahtungsträgers und/oder des Wandlers und Schutzmasse gesteigert wird.

In einer besonderen Weiterbildung des angegebenen Sensors ist der aufgeraute Teil der Oberfläche des Verdrahtungsträgers und/oder des Wandlers mit einem Laser aufgeraut. Mit dem Laser kann die Oberfläche des Verdrahtungsträgers und/oder des Wandlers nicht nur aktiviert werden, durch den Laser werden von der Oberfläche des Verdrahtungsträgers und/oder des Wandlers auch eventuell vorhandene Formtrennmittel abgetragen, die eine Haftung zwischen dem Verdrahtungsträgers und/oder des Wandlers und der Schutzmasse unterdrücken könnten.

Gemäß einem weiteren Aspekt der Erfindung umfasst ein Verfahren zum Herstellen eines elektrischen Übertragers, insbesondere einen linearer induktiver Positionssensor, LIPS genannt die Schritte:
- Anordnen elektrischer Anschlüsse für den Übertrager und eine magnetischen Kern für den Übertrager,
- Formen eines Spulenkörpers um den magnetischen Kern derart, dass die elektrischen Anschlüsse vom Spulenkörper gehalten werden, und
- Wickeln wenigstens eines Spulendrahtes auf den Spulenkörper.

Das angegebene Verfahren kann um Merkmale erweitert werden, die den Merkmalen des oben genannten Übertragers sinngemäß entsprechen. Insbesondere kann ein Ausdehnungskoeffizient des magnetischen Kerns im Bereich eines Ausdehnungskoeffizienten des Spulenkörpers mit den bereits genannten Vorteilen liegen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 einen Tandemhauptzylinder mit einem Wegsensor zeigen,
Fig. 2 den Wegsensor aus Fig. 1,
Fig. 3 eine Schnittstelle am Wegsensor der Fig. 2,
Fig. 4 eine alternative Schnittstelle am Wegsensor der Fig. 2,
Fig. 5 eine noch alternative Schnittstelle am Wegsensor der Fig. 2,
Fig. 6 einen Wandler im Wegsensor aus Fig. 2 in einem ersten Produktionszustand, und
Fig. 7 einen Wandler im Wegsensor aus Fig. 2 in einem zweiten Produktionszustand zeigen.

In den Figuren werden gleiche technische Elemente mit gleichen Bezugszeichen versehen und nur einmal beschrieben.

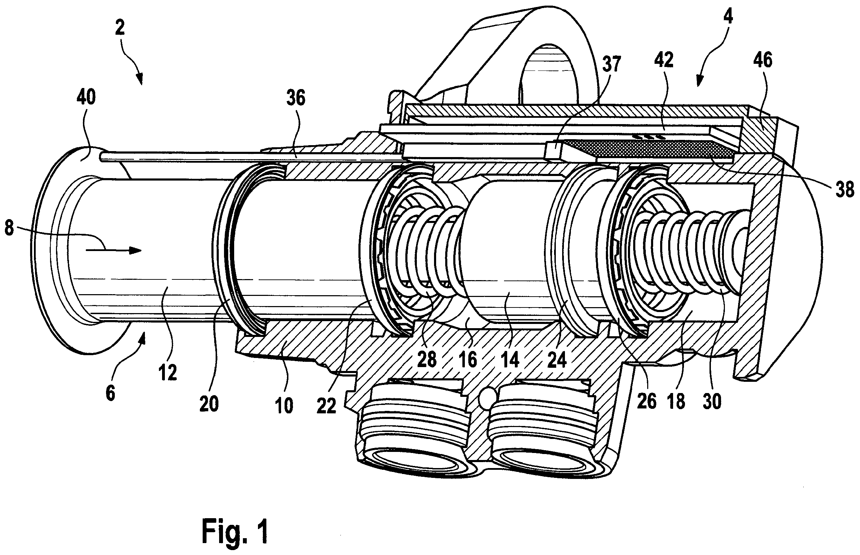

Es wird auf Fig. 1 Bezug genommen, die einen Tandemhauptzylinder 2 mit einem Wegsensor 4 zeigt.

Der Tandemhauptzylinder 2 weist ferner einen Druckkolben 6 auf, der in einer Bewegungsrichtung 8 in einem Gehäuse 10 beweglich angeordnet ist, wobei die Bewegung des Druckkolbens 6 durch ein nicht gezeigtes Fußpedal gesteuert werden kann. Der Druckkolben 6 selbst ist in einen Primärkolben 12 und einen Sekundärkolben 14 unterteilt, wobei der Primärkolben 12 einen Eingang des Gehäuses 10 verschließt und der Sekundärkolben 12 den Innenraum des Gehäuses 10 in eine Primärkammer 16 und eine Sekundärkammer 18 unterteilt. Im Bereich des Eingangs des Gehäuses 10 ist am Primärkolben 12 eine Sekundärmanschette 20 angeordnet, die den Innenraum des Gehäuses 10 von der Umgebungsluft isoliert. In den Innenraum des Gehäuses 10 hinein gesehen folgt nach der Sekundärmanschette 20 eine Primärmanschette 22, die einen Spalt zwischen dem Primärkolben 12 und einer Wand des Gehäuses 10 abdichtet. Eine Druckmanschette 24 am Sekundärkolben 14 isoliert den Druck der Primärkammer 16 vom Druck der Sekundärkammer 18. Ferner dichtet eine weitere Primärmanschette 26 am Sekundärkolben 14 einen Spalt zwischen dem Sekundärkolben 14 und der Wand des Gehäuses 10 ab. Der Primärkolben 12 ist gegen den Sekundärkolben 14 über eine erste Feder 28 abgestützt, während der Sekundärkolben gegen einen Gehäuseboden über eine zweite Feder 30 abgestützt ist. Über einen ersten und zweiten Anschluss 32, 34 können entsprechend die Primärkammer 16 und die Sekundärkammer 18 mit nicht gezeigter Hydraulikflüssigkeit versorgt werden.

Da dem Fachmann die Funktionsweise eines Tandemhauptzylinders bekannt ist, soll auf eine detaillierte Darstellung dieser verzichtet werden.

Der Wegsensor 4 weist einen Probekörper in Form eines Schiebers 36 mit einem Gebermagneten 37 an seinem Kopfende auf, der in die Bildebene hinein betrachtet unter einen noch zu beschreibenden Sensorschaltkreis 38 geschoben werden kann. Zum Schieben des Schiebers 36 weist der Primärkolben 12 einen Flansch 40 auf, an dem der Schieber 36 gegengelagert ist. Der Flansch 40 und der Primärkolben 12 bilden damit gemeinsam ein Messobjekt, dessen Position durch die noch zu beschreibenden Sensorschaltkreis 38 des Wegsensors 4 ermittelt wird. Der Sensorschaltkreis 38 ist aus mehreren Leiterbahnen auf einem Verdrahtungsträger 42, wie einem Leadframe, einer Leiterplatte oder einem anderen Substrat gebildet. Auf die Leiterplatte 42 mit dem Sensorschaltkreis 38 kann zum Schutz beispielsweise vor Schmutz ein Deckel 46 aufgelegt sein.

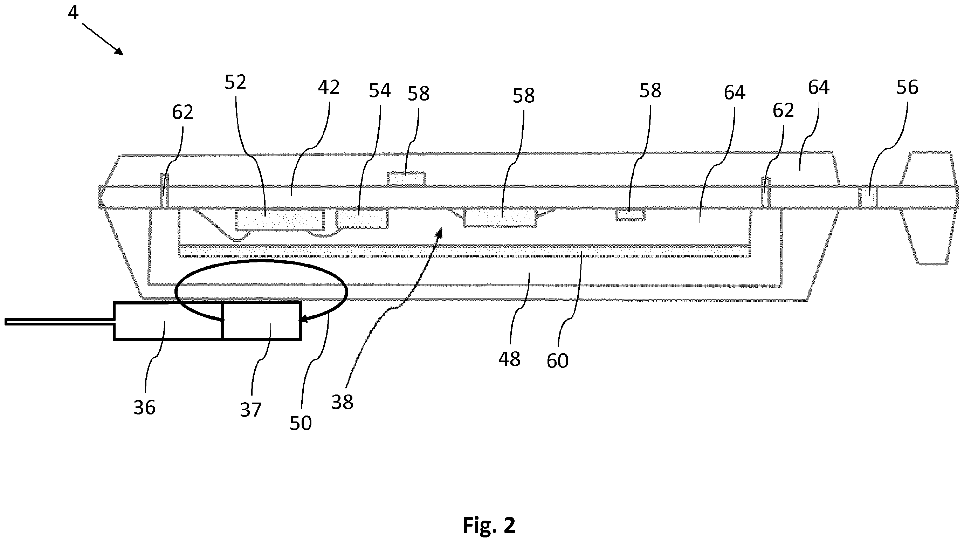

Es wird auf Fig. 2 Bezug genommen, die den Wegsensor 4 aus Fig. 1 zeigt.

Der Schaltkreis 38 des Wegsensors umfasst einen Wandler 48, der in der vorliegenden Ausführung als linearer induktiver Positionssensor, LIPS genannt ausgebildet ist. Der Wandler 48 erfasst ein magnetisches Feld 50 des Gebermagneten 37 und gibt darauf basierend ein nicht näher referenziertes elektrisches Gebersignal an den Schaltkreis 38 aus. Dieses Gebersignal wird von einem ersten Signalverarbeitungschip 52 und einem zweiten Signalverarbeitungschip 54 in ein nicht näher referenziertes Messsignal umgewandelt, aus dem die Lage des Schiebers 36 und damit die Lage des Flansches 40 und des Primärkolbens 12 hervorgeht. Das so erzeugte Messsignal kann abschließend an einer Sendeschnittstelle 56 des Wegsensors 4 über ein nicht weiter dargestelltes Kabel abgegriffen und zu einer nicht weiter dargestellten höheren Signalverarbeitungseinheit wie beispielsweise einer Motorsteuerung in einem nicht weiter dargestellten Fahrzeug weitergeleitet werden.

Der Schaltkreis 38 kann Schutzelemente 58 zum Schutz der beiden Signalverarbeitungschips 52, 54 beispielsweise vor einer Überspannung umfassen. Ferner kann zwischen dem Schaltkreis 38 und dem Wandler 48 eine Abschirmplatte 60 angeordnet sein, die elektromagnetische Felder zwischen dem Schaltkreis 38 und dem Wandler 38 abschirmt und so einen Einfluss des Schaltkreises 38 auf den Wandler 48 vermeidet.

In der vorliegenden Ausführung ist der Wandler 48 über einen Formschluss 62 in einer definierten Lage auf dem Verdrahtungsträger 42 angeordnet. Dabei den Verdrahtungsträger 42 und den Wandler 48 eine Schutzmasse 64, die den Verdrahtungsträger 42 und den Wandler 48 mechanisch zusammenhält. Auf diese Weise kann die Schutzmasse 64 nicht nur eine mechanische Stabilität zwischen dem Verdrahtungsträger 42 und dem Wandler 48 gewährleisten, ein Innenraum des Wegsensors 4 mit dem Schaltkreis 38 ist auch wirksam vor Verschmutzung geschützt. Dabei kann dieser Innenraum besonders bevorzugt ebenfalls mit der Schutzmasse 64 ausgefüllt sein.

Der Wegsensor 4 kann bei der Herstellung mit der Schutzmasse 64 beispielsweise umspritzt werden. Dazu kann der Verdrahtungsträger 42 des Wegsensors 4 beispielsweise an der Sendeschnittstelle 56 gehalten werden, die zur elektrischen Kontaktierung mit dem oben genannten Kabel ohnehin frei bleiben muss.

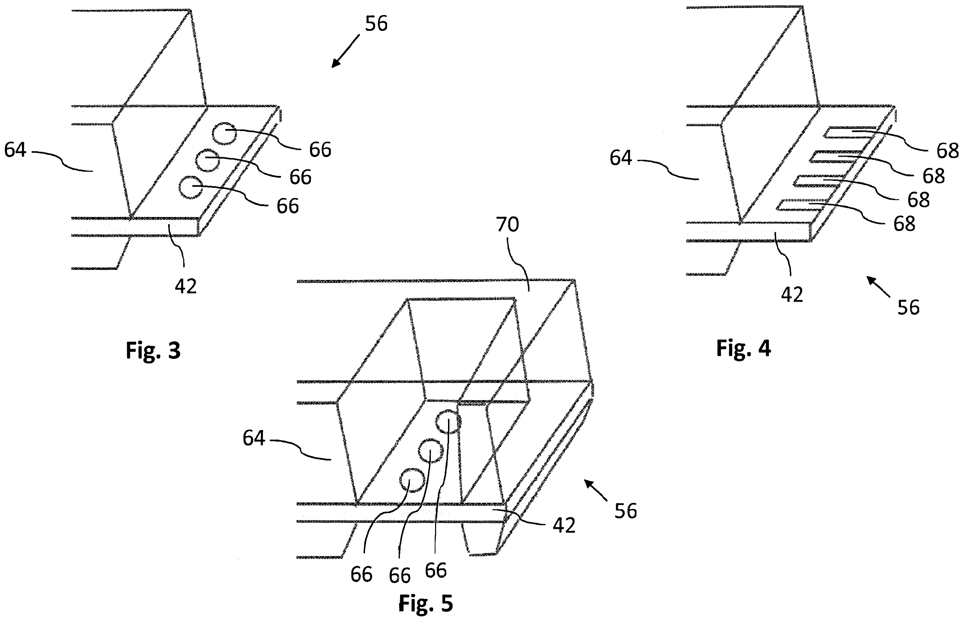

Diese Sendeschnittstelle 56 kann verschieden ausgeführt sein, was in den Fig. 3 bis 5 gezeigt ist. Danach kann die Sendeschnittstelle Kontaktbohrungen 66 oder Randgruppenstecker 68 umfassen. Die Sendeschnittstelle 56 kann dabei wie in Fig. 2 und 5 gezeigt, auch von einer aus der Schutzmasse 64 gebildeten Wand 70 umgeben sein.

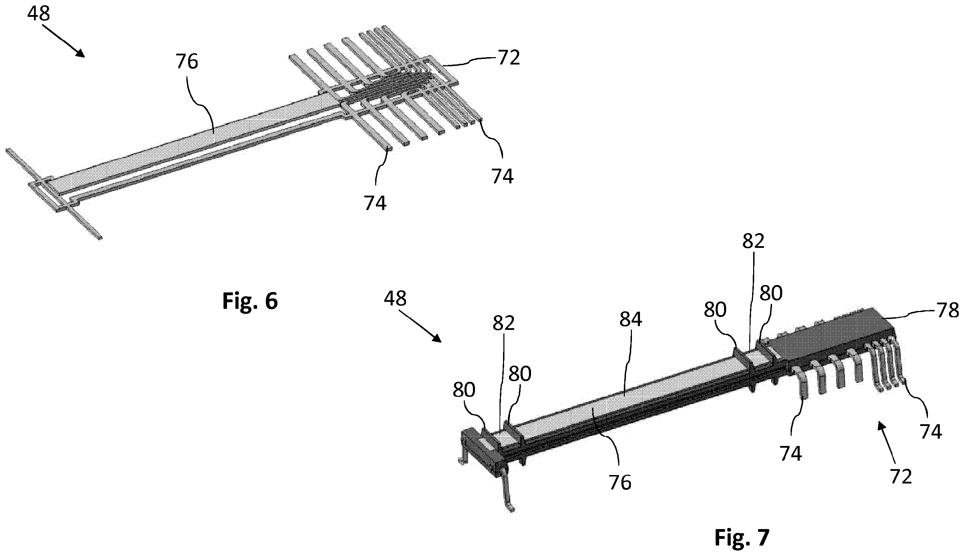

Es wird auf Fig. 6 Bezug genommen, die den Wandler 48 im Wegsensor 4 aus Fig. 2 in einem ersten Produktionszustand zeigt.

Zur Herstellung des als LIPS auszubildenden Wandlers 48 wird für den ersten Produktionszustand ein Leadframe 72 mit Kontaktbeinchen 74 ausgestanzt, der den Wandler 48 auf dem oben genannten Verdrahtungsträger 42 mechanisch abstützen und ihn mit dem Schaltkreis 38 auf dem Verdrahtungsträger 42 elektrisch kontaktiert. Von den Kontaktbeinchen 74 sind in Fig. 6 der Übersichtlichkeit halber nur einige mit einem Bezugszeichen versehen.

Anschließend wird in dem Leadframe 72 ein magnetischer Kern 76 angeordnet, der später zur Übertragung eines magnetischen Feldes zwischen noch zu beschreibenden Spulen vorgesehen ist.

Es wird auf Fig. 7 Bezug genommen, die den Wandler 48 im Wegsensor 4 aus Fig. 2 in einem zweiten Produktionszustand zeigt.

Zur Herstellung des in Fig. 7 gezeigten zweiten Produktionszustandes wird der Leadframe 72 mit dem magnetischen Kern 76 mit einer Wandlerschutzmasse 78 umhüllt. Diese Wandlerschutzmasse 78 besteht in der vorliegenden Ausführung aus Duroplast, das einen im Wesentlichen gleichen Ausdehnungskoeffizienten wie der magnetische Kern 76 aufweist, der beispielsweise aus Eisen hergestellt sein kann. Im Falle von Temperaturschwankungen werden so kaum mechanische Spannungen in den magnetischen Kern 76 eingetragen.

Die Wandlerschutzmasse 78 wird dabei mit vier Trennelementen 80 ausgebildet, dass sie den magnetischen Kern 76 in zwei äußere Wickelbereiche 82 und einen inneren Wickelbereich 84 unterteilen. Dabei sind die äußeren Wickelbereiche 82 kürzer ausgebildet, als der innere Wickelbereich 84.

Anschließend, wenn die Wandlerschutzmasse 78 beispielsweise ausgehärtet ist, können die Kontaktbeinchen 74 dann wie in Fig. 7 gezeigt in Richtung einer Unterseite des Wandlers 48 gebogen werden.

Zur Fertigstellung des Wandlers 48 werden in die Wickelbereiche 82, 84 auf den Wandler nicht weiter dargestellte Spulendrähte aufgewickelt. Eine Primärspule wird dabei über alle Wickelbereiche 82, 84 hinweg aufgewickelt, während in je einen der äußeren Wickelbereiche 82 eine baugleiche Sekundärspule aufgewickelt wird.

Im Betrieb des Wandlers wird beispielsweise an die Primärspule ein elektrisches Wechselspannungssignal angelegt, das über den magnetischen Kern 76 in den baugleichen Sekundärspulen ein identisches Ausgangssignal induzieren sollte.

Nähert sich jetzt der Gebermagnet 37 des Schiebers 36 einer der beiden Sekundärspulen, so treibt er den magnetischen Kern 76 in die Sättigung. Dies führt zu einem veränderten Übertragungsverhalten des elektrischen Wechselspannungssignals zwischen der Primärspule und der entsprechenden Sekundärspule, dem sich der Gebermagnet 37 genähert hat, was in einer dem Fachmann bekannten Weise über den Sensorschaltkreis ausgewertet werden kann. Auf diese Weise kann die Position des Gebermagneten 37 über dem Wandler 48 erfasst werden.

## Patentansprüche

1. Sensor (4) zum Erfassen einer Position eines Geberelements (37), das eine von der Position abhängige physikalische Größe (50) abgibt, umfassend einen Wandler (48) zum Wandeln der physikalischen Größe (50) in ein elektrisches Gebersignal, einen Schaltkreis (38) auf einem Verdrahtungsträger (42) zum Empfangen des Gebersignals aus dem Wandler (48) und Ausgeben eines dem Gebersignal entsprechenden Messsignals und eine Schutzmasse (64), die den Wandler (48) und den Verdrahtungsträger (42) wenigstens teilweise umhüllt und so den Wandler (48) auf dem Verdrahtungsträger (42) hält, wobei die Schutzmasse (64) direkt ein Außengehäuse des angegebenen Sensors (2) bildet, **dadurch gekennzeichnet, dass** die Schutzmasse (64) ein Duroplast-Material umfasst und einen Ausdehnungskoeffizienten aufweist, der im Bereich eines Ausdehnungskoeffizienten des Wandlers (48) liegt, wobei als Wandler (48) ein einen magnetischen Fluss wandelndes elektrisches Bauelement mit einem magnetischen Kern (76) verwendet wird, dessen Wandlungsprinzip von einer Sättigung des magnetischen Kerns (76) abhängt.

2. Sensor (2) nach Anspruch 1, wobei der Schaltkreis (38) auf dem Verdrahtungsträger (42) einen von der Schutzmasse (64) freigestellten Teil (56) umfasst.

3. Sensor (2) nach Anspruch 2, wobei der Schaltkreis (38) in dem von der Schutzmasse (64) freigestellten Teil (56) eingerichtet ist, das Messsignal auszugeben.

4. Sensor (2) nach einem der vorstehenden Ansprüche, wobei der Wandler (48) ein elektrischer Übertrager (48), insbesondere ein linearer induktiver Positionssensor, LIPS genannt, ist, der eingerichtet ist, wenigstens ein Referenzsignal in Abhängigkeit einer Position des Geberelements (37) als Gebersignal zu übertragen.

5. Sensor (2) nach Anspruch 4, wobei der Übertrager (48) zwei Übertragerspulen aufweist, die über einen Spulenkörper (78) auf einen magnetische Kern (76) aufgewickelt sind, dessen Ausdehnungskoeffizienten im Bereich eines Ausdehnungskoeffizienten des Spulenkörpers (78) liegt.

6. Verfahren zum Herstellen eines Sensors (2) nach einem der vorstehenden Ansprüche umfassend:
- Kontaktieren des Wandlers (48) mit dem Schaltkreis (38) auf dem Verdrahtungsträger (42), und
- Umhüllen des Wandlers (48) und des Verdrahtungsträgers (42) wenigstens teilweise mit der Schutzmasse (64), so dass die Schutzmasse (64) den Wandler (48) auf dem Verdrahtungsträger (42) hält und direkt ein Außengehäuse des angegebenen Sensors (4) bildet.

7. Verfahren nach Anspruch 6, wobei eine von der Schutzmasse (64) einzuhüllende Oberfläche des Verdrahtungsträgers (42) und/oder des Wandlers (48) vor dem Umhüllen des Wandlers (48) und des Verdrahtungsträgers (42) mit der Schutzmasse (64) aktiviert wird.

8. Verfahren nach Anspruch 6 oder 7 zum Herstellen eines Sensors (4) nach einem der Ansprüche 4 oder 5, umfassend:
- Anordnen elektrischer Anschlüsse (74) und einen magnetischen Kern (76) für den Übertrager (48),
- Formen eines Spulenkörpers (78) um den magnetischen Kern (76) derart, dass die elektrischen Anschlüsse (74) vom Spulenkörper (78) gehalten werden, und
- Wickeln wenigstens eines Spulendrahtes auf den Spulenkörper (78).

## Claims

1. Sensor (4) for detecting a position of an encoder element (37), which outputs a physical variable (50) which is dependent on the position, said sensor comprising a transducer (48) for converting the physical variable (50) into an electrical encoder signal, a circuit (38) on a wiring carrier (42) for receiving the encoder signal from the transducer (48) and outputting a measurement signal corresponding to the encoder signal, and a protective compound (64), which at least partially envelops the transducer (48) and the wiring carrier (42) and thus holds the transducer (48) on the wiring carrier (42), wherein the protective compound (64) forms directly an outer housing of the specified sensor (2), **characterized in that** the protective compound (64) comprises a thermosetting plastic material and a coefficient of expansion which is within the range of a coefficient of expansion of the transducer (48), wherein an electrical component which converts a magnetic flux and has a magnetic core (76) is used as the transducer (48), the conversion principle of said electrical component being dependent on saturation of the magnetic core (76).

2. Sensor (2) according to one of the preceding claims, wherein the circuit (38) on the wiring carrier (42) comprises a part (56) which is free of the protective compound (64).

3. Sensor (2) according to Claim 2, wherein the circuit (38) in the part (56) which is free from the protective compound (64) is designed to output the measurement signal.

4. Sensor (2) according to one of the preceding claims, wherein the transducer (48) is an electrical transformer (48), in particular a linear inductive position sensor (LIPS), which is designed to transmit at least one reference signal depending on a position of the encoder element (37) as encoder signal.

5. Sensor (2) according to Claim 4, wherein the transformer (48) has two transformer coils, which are wound onto a magnetic core (76) by means of a coil former (78), the coefficient of expansion of said magnetic core being in the region of a coefficient of expansion of the coil former (78).

6. Method for producing a sensor (2) according to one of the preceding claims, comprising:
- making contact between the transducer (48) and the circuit (38) on the wiring carrier (42), and
- enveloping the transducer (48) and the wiring carrier (42) at least partially with the protective compound (64) so that the protective compound (64) holds the transducer (48) on the wiring carrier (42) and forms directly an outer housing of the specified sensor (4).

7. Method according to Claim 6, wherein a surface of the wiring carrier (42) and/or of the transducer (48) which is to be enveloped by the protective compound (64) is activated prior to the transducer (48) and the wiring carrier (42) being enveloped by the protective compound (64).

8. Method according to Claim 6 or 7 for producing a sensor (4) according to one of Claims 4 or 5 comprising:
- arranging electrical connections (74) and a magnetic core (76) for the transformer (48),
- forming a coil former (78) around the magnetic core (76) in such a way that the electrical connections (74) are held by the coil former (78), and
- winding at least one coil wire onto the coil former (78).

## Revendications

1. Capteur (4) destiné à saisir la position d'un élément émetteur (37) qui délivre une grandeur physique (50) qui dépend de la position, et comprenant
un convertisseur (48) qui convertit la grandeur physique (50) en un signal électrique d'émetteur,
un circuit (38) disposé sur un support de câblage (42), qui reçoit le signal émis par le convertisseur (48) et qui délivre un signal de mesure qui correspond au signal émis et
une pâte de protection (64) qui englobe au moins en partie le convertisseur (48) et le support de câblage (42) et maintient ainsi le convertisseur (48) sur le support de câblage (42), la pâte de protection (64) formant directement un boîtier extérieur dudit capteur (2),
**caractérisé en ce que**
la pâte de protection (64) comprend une matière plastique thermodurcissable et présente un coefficient de dilatation du même ordre de grandeur que le coefficient de dilatation du convertisseur (48), le convertisseur (48) utilisé étant un composant électrique convertissant un flux magnétique, doté d'un noyau magnétique (76) et dont le principe de conversion dépend de la saturation du noyau magnétique (76).

2. Capteur (2) selon la revendication 1, dans lequel le circuit (38) prévu sur le support de câblage (42) comprend une partie (56) exempte de pâte de protection (64) .

3. Capteur (2) selon la revendication 2, dans lequel le circuit (38) dans la partie (56) qui est exempte de la pâte de protection (64) est conçue pour délivrer le signal de mesure.

4. Capteur (2) selon l'une des revendications précédentes, dans lequel le convertisseur (48) est un transmetteur électrique (48), en particulier un capteur de position inductif linéaire appelé LIPS conçu pour transmettre comme signal émis au moins un signal de référence en fonction de la position de l'élément émetteur (37).

5. Capteur (2) selon la revendication 4, dans lequel le transmetteur (48) présente deux bobines de transmetteur enroulées sur un noyau magnétique (76) par l'intermédiaire d'un corps de bobine (78), le coefficient de dilatation du noyau magnétique étant du même ordre de grandeur que le coefficient de dilatation du corps de bobine (78).

6. Procédé de fabrication d'un capteur (2) selon l'une des revendications précédentes, comprenant :
la mise en contact du convertisseur (48) avec le circuit (38) sur le support de câblage (42) et
l'englobement au moins partiel du convertisseur (48) et du support de câblage (42) par la pâte de protection (64) de telle sorte que la pâte de protection (64) maintienne le convertisseur (48) sur le support de câblage (42) et forme directement un boîtier extérieur dudit capteur (4).

7. Procédé selon la revendication 6, dans lequel la surface du support de câblage (42) et/ou du convertisseur (48) qui doit être englobée par la pâte de protection (64) est activée avant l'englobement du convertisseur (48) et du support de câblage (42) par la pâte de protection (64).

8. Procédé selon les revendications 6 ou 7, pour la fabrication d'un capteur (4) selon l'une des revendications 4 ou 5, comprenant :
le placement de bornes (74) de raccordement électrique et d'un noyau magnétique (76) pour le transmetteur (48),
la formation d'un corps de bobine (78) autour du noyau magnétique (76) de telle sorte que les bornes (74) de raccordement électrique soient maintenues par le corps de bobine (78) et
l'enroulement d'au moins un fil de bobinage sur le corps de bobine (78).
